**Europäisches Patentamt**

**European Patent Office**

**Office européen des brevets**

(19)

(11) Veröffentlichungsnummer: **0 012 865**
**B1**

(12) **EUROPÄISCHE PATENTSCHRIFT**

(45) Veröffentlichungstag der Patentschrift:
09.02.83

(51) Int. Cl.³: **F 16 K 31/06**

(21) Anmeldenummer: **79104749.1**

(22) Anmeldetag: **29.11.79**

(54) **Elektromagnetisch betätigbares 3/2-Wegeventil, insbesondere zur Fernsteuerung von einseitig mit einem Fluid beaufschlagbaren Vorrichtungen.**

(30) Priorität: **23.12.78 DE 2855902**

(43) Veröffentlichungstag der Anmeldung:
**09.07.80 Patentblatt 80/14**

(45) Bekanntmachung des Hinweises auf die Patenterteilung:
**09.02.83 Patentblatt 83/6**

(84) Benannte Vertragsstaaten:
**AT BE CH FR GB IT NL SE**

(56) Entgegenhaltungen:
**DE-B-1 272 664**
**US-A-2 827 923**
**US-A-3 422 850**

(73) Patentinhaber: **A. und K. Müller GmbH & Co. KG,**
**Bücherstrasse 31-37, D-4000 Düsseldorf 13 (DE)**

(72) Erfinder: **Moldenhauer, Hermann, Suitbertusstrasse 114,**
**D-4000 Düsseldorf 1 (DE)**
Erfinder: **Müller, Kurt, Benrather Schlossufer 61,**
**D-4000 Düsseldorf 13 (DE)**

(74) Vertreter: **Feder, Heinz, Dr., Postfach 11 04 26,**
**D-4000 Düsseldorf 11 (DE)**

Elektromagnetisch betätigbares 3/2-Wegeventil, insbesondere zur
Fernsteuerung von einseitig mit einem Fluid beaufschlagbaren Vorrichtungen

Die Erfindung betrifft ein elektromagnetisch betätigbares 3/2-Wegeventil, insbesondere zur Fernsteuerung von einseitig mit einem Fluid beaufschlagbaren Vorrichtungen, beispielsweise Membranen, Zylindern, Druckverstärkern usw.

Die Erfindung geht dabei aus von einem stopfbuchsenlosen Ventil mit einem Ventilgehäuse, in dem eine einseitig offene Ventilkammer angeordnet ist, die über einen ersten Kanal mit einem Druckanschluß und über einen zweiten Kanal mit einem Arbeitsanschluß verbunden ist, wobei das in der Ventilkammer gelegene Ende des ersten Kanals als erster Ventilsitz ausgebildet ist, einem die offene Seite der Ventilkammer abschließenden, mit dem Ventilgehäuse fest verbundenen Ventiloberteil, das ein mit einem Ende in das Ventilgehäuse eingesetztes äußeres Führungsrohr aufweist, das an seinem, dem Ventilgehäuse zugewandten Ende einstückig mit einer Befestigungsvorrichtung verbunden ist, und ein Kopfstück aufweist, durch welches ein Rücklaufkanal nach außen geführt ist, einer um das Ventiloberteil herum angeordneten Magnetspule, die an ihrer Außenseite von einem Magnetjoch umfaßt ist, dessen Enden am Kopfstück bzw. dem äußeren Führungsrohr anliegen, sowie einem innerhalb des äußeren Führungsrohrs angeordneten, beweglichen Ventilinnenteil mit einem Magnetanker und einem am dem ersten Ventilsitz zugewandten Ende angeordneten Ventilteller, das unter der Einwirkung einer Druckfeder in einer Stellung festgehalten ist, in der der Ventilteller auf dem ersten Ventilsitz aufliegt und bei dem innerhalb des äußeren Führungsrohrs und koaxial zu diesem ein inneres Rohr angeordnet ist, das mit einem Ende an den Rücklaufkanal angeschlossen ist und dessen anderes, als zweiter Ventilsitz ausgebildetes Ende in einem vorgegebenen Abstand dem ersten Ventilsitz gegenüberliegt, und bei dem das Ventilinnenteil als hohlzylindrischer, zwischen dem äußeren Führungsrohr und dem inneren Rohr angeordneter Körper ausgebildet ist, der als Magnetanker wirkt, der die Ventilkammer mit dem Innenraum des Körpers verbindende Durchtrittsöffnungen aufweist, wobei der beidseitig wirkende Ventilteller so angeordnet ist, daß er bei einer Hubbewegung des Magnetankers entgegen der Schließkraft der Druckfeder nach einem vorgegebenen Hubweg auf dem zweiten Ventilsitz aufliegt.

Ventile dieser Bauart haben die Eigenschaft, daß bei nicht erregter Magnetspule der erste Ventilsitz durch den Ventilteller geschlossen ist und der Arbeitsanschluß mit dem Rücklaufkanal verbunden ist. Bei erregter Magnetspule ist der erste Ventilsitz geöffnet und der Arbeitsanschluß ist mit dem Druckanschluß verbunden, während der Rücklaufkanal geschlossen ist.

Ein bekanntes Ventil dieser Bauart ist in der DE-B-1 272 664 beschrieben. Dieses bekannte Ventil hat einige Nachteile, die es nicht für alle Anwendungsarten geeignet erscheinen lassen. Das Ventil ist zur Verwendung bei flüssigen Medien ungeeignet und kann nur mit Unterstützung des im Medium herrschenden Druckes betätigt werden. Dadurch ist seine Betriebssicherheit in Frage gestellt, weil es zum einwandfreien Funktionieren einen bestimmten Mindestdruck des Mediums benötigt.

Es ist weiterhin ein Ventil bekannt (US-A-3 422 850), bei dem am Ventilinnenteil ein Ventilteller angeordnet ist, der als aus elastischem Material bestehende Dichtungsplatte ausgebildet ist und der unter der Einwirkung einer Druckfeder in einer Stellung festgehalten ist, in der er mit seiner einen Oberfläche auf einem ersten Ventilsitz aufliegt, während er bei einer Hubbewegung des Ventilinnenteils entgegen der Schließkraft der Druckfeder nach einem vorgegebenen Hubweg mit seiner anderen Oberfläche auf einem zweiten Ventilsitz aufliegt. Dieses bekannte Ventil von grundsätzlich anderer Bauart weist den Nachteil auf, daß der Rücklaufweg des Mediums vom Arbeitsanschluß zum Rücklaufkanal am Ventilinnenteil außen vorbei durch den Luftspalt des Elektromagneten erfolgt.

Die der Erfindung zugrunde liegende Aufgabe bestand darin, ausgehend von einem Ventil der eingangs erläuterten Bauart, ein einfach aufgebautes elektromagnetisch betätigbares 3/2-Wegeventil zu schaffen, bei dem die erwähnten nachteiligen Nebenwirkungen vermieden werden, das sowohl für flüssige als auch für gasförmige Medien geeignet ist, das mit sehr geringen magnetischen Verlusten und unabhängig vom Mediumsdruck arbeitet und mit geringer elektrischer Energie ansteuerbar ist und mit dem dennoch hohe Durchflußleistungen erzielt werden bzw. in hohen Druckstufen gearbeitet werden kann.

Die Lösung dieser Aufgabe erfolgt erfindungsgemäß dadurch, daß das obere Ende des äußeren Führungsrohres innerhalb der Magnetspule mit dem Kopfstück verbunden ist, wobei ein dem Kopfstück zugewandter oberer Abschnitt des Führungsrohres aus nichtmagnetisierbarem Werkstoff besteht, während ein der Befestigungsvorrichtung zugewandter unterer Abschnitt des Führungsrohres aus magnetisch leitendem Material besteht und daß die Durchtrittsöffnung als unmittelbar an dem der Ventilkammer zugewandten Ende des Ventilinnenteils angeordnete Schlitze ausgebildet sind und der Ventilteller eine aus elastischem Material bestehende Dichtungsplatte ist.

Wie weiter unten anhand eines Ausführungsbeispieles im einzelnen erläutert wird, besitzt das erfindungsgemäße Ventil sehr kurze Durchflußwege und es wird insbesondere der Rücklauf vom Arbeitsanschluß zum Rücklaufkanal nicht durch den Ringspalt zwischen dem Magnetanker und dem äußeren Führungsrohr geführt. Das Ventil ist sehr einfach aufgebaut. Es ist unabhängig vom Mediumsdruck und besitzt einen als elastische Platte ausgebildeten Ventilteller, der mittels der beiden genannten Ventilsitze den jeweiligen Verschluß bewirkt.

Das erifndungsgemäße Ventil kann wegen seiner geringen magnetischen Verluste mit geringer elektrischer Leistung angesteuert werden, was es für eine elketronische Ansteuerung besonders geeignet macht. Ebenso kann es mit Vorteil für gegenüber bekannten Ventilen vergrößerte Durchflußleistungen und höhere Druckstufen eingesetzt werden.

Im folgenden werden anhand der Figuren Ausführungsbeispiele für das erfindungsgemäße Ventil näher erläutert.

Fig. 1 zeigt eine Ausführungsform des erfindungsgemäßen Ventils im Schnitt.

In den Fig. 2.1, 2.2, 2.3 sind Einzelheiten von Varianten der Ausführungsform nach Fig. 1 dargestellt.

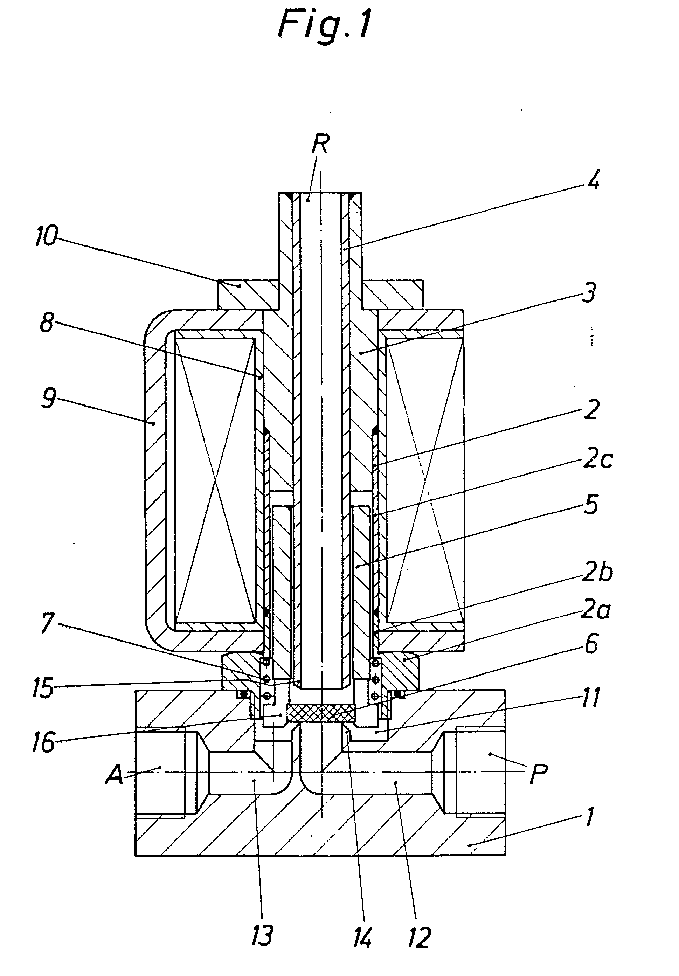

Das in Fig. 1 dargestellte Ventil besitzt ein Ventilgehäuse 1 mit einem Druckanschluß P, der an eine Druckquelle anschließbar ist und einem Arbeitsanschluß A, der an einen Verbraucher anschließbar ist. Der Druckanschluß P ist über einen Kanal 12 und der Arbeitsanschluß A über einen Kanal 13 mit einer Ventilkammer 11 verbunden, die einseitig offen im Ventilgehäuse 1 angeordnet ist. Dabei ist das in die Ventilkammer 11 mündende Ende des Kanals 12 als Ventilsitz 14 ausgebildet.

Auf das Ventilgehäuse 1 ist druckdicht ein Ventiloberteil so aufgeschraubt, daß es die Ventilkammer 11 nach außen abschließt. Dieses Ventiloberteil besitzt ein äußeres Führungsrohr 2, das an seinem dem Ventilgehäuse 1 zugewandten Ende einstückig mit einer Befestigungsvorrichtung verbunden ist, die als Schraubenmutter 2a mit einem ein Außengewinde tragenden Ansatzstück ausgebildet ist, das in das Ventilgehäuse 1 eingeschraubt ist. Am anderen Ende ist das äußere Führungsrohr 2 mit einem Kopfstück 3 verbunden, durch das ein inneres Rohr 4 so hindurchgeführt ist, daß es konzentrisch zum äußeren Führungsrohr 2 in der Innenraum zwischen dem Kopfstück 3 und dem Ventilgehäuse 1 hineinragt. Dabei ist das dem Ventilgehäuse 1 zugewandte Ende dieses inneren Rohres 4 als Ventilsitz 15 ausgebildet, der dem Ventilsitz 14 in der Ventilkammer 11 in einem vorgegebenen Abstand gegenüberliegt.

Zwischen dem inneren Rohr 4 und der Innenseite des äußeren Führungsrohres 2 entsteht ein Innenraum mit ringförmigem Querschnitt, in dem das bewegbare Ventilinnenteil angeordnet ist, das als hohlzylindrischer Körper aus magnetisch leitendem Material ausgebildet ist, der den Magnetanker 5 bildet, wobei am unteren Ende des Magnetankers 5 ein als Dichtungsplatte 6 ausgebildeter Ventilteller gehaltert ist. Eine Druckfeder 7, die zwischen einem Absatz im äußeren Führungsrohr 2 und einer flanschartigen Verbreiterung des Magnetankers 5 an seinem die Dichtungsplatte 6 tragenden Ende angeordnet ist, bewirkt, daß der Magnetanker 5 unter der Einwirkung der Druckfeder 7 in eine Stellung gedrückt wird, in der die Dichtungsplatte 6 auf dem Ventilsitz 14 aufliegt.

Um das Kopfstück 3 und das äußere Führungsrohr 2 herum ist eine Magnetspule 8 angeordnet, um deren Außenseite ein Magnetjoch 9 herumgeführt ist, dessen Enden am Kopfstück 3 bzw. am äußeren Führungsrohr 2 anliegen. Magnetspule 8 und Magnetjoch 9 sind durch eine auf das Kopfstück 3 aufgeschraubte Überwurfmutter 10 festgehalten.

Das Kopfstück 3 besteht aus magnetisch leitendem Material, während das innere Rohr 4 und der in Fig. 1 obere Abschnitt 2c des äußeren Führungsrohres 2 aus nicht magnetisierbarem Werkstoff bestehen. Der in Fig. 1 untere Abschnitt 2b des äußeren Führungsrohres 2 sowie die Schraubenmutter 2a bestehen wiederum aus magnetisch leitendem Material.

Der Magnetanker 5 weist an seinem der Ventilkammer 11 zugekehrten Ende Durchtrittsöffnungen 16 auf, die beispielsweise schlitzartig ausgebildet sein können und die den Innenraum der Ventilkammer 11 mit dem Innenraum des Magnetankers 5 verbinden.

Die Funktionsweise des in Fig. 1 dargestellten Ventils ist folgende:

Bei nicht erregter Magnetspule 8 wird unter der Einwirkung der Druckfeder 7 der Magnetanker 5 in Fig. 1 nach unten gedrückt, so daß die Dichtungsplatte 6 mit ihrer Unterseite auf dem Ventilsitz 14 aufliegt. In dieser Stellung ist der Druckanschluß P verschlossen und der Arbeitsanschluß A über die Durchtrittsöffnungen 16 und das innere Rohr 4 mit dem Rücklaufkanal R verbunden.

Wird die Magnetspule 8 erregt, so wird durch die elektromotorische Kraft der Magnetanker 5 in in Fig. 1 vertikaler Richtung entgegen der Kraft der Druckfeder 7 nach oben gezogen, und zwar so weit, bis nach einem vorgegebenen Hubweg die Oberseite der Dichtungsplatte 6 auf dem Ventilsitz 15 am unteren Ende des inneren Rohres 4 aufsitzt. In dieser Stellung ist der Druckanschluß P mit dem Arbeitsanschluß A verbunden, während der Rücklaufkanal R verschlossen ist.

In diesem Zustand des Ventils bei erregter Magnetspule 8 erfolgt der Kraftlinienfluß über das obere Ende des Magnetjochs 9, das Kopfstück 3, den Magnetanker 5, einen mit X bezeichneten Luftspalt zurück zum unteren Ende des Magnetjochs 9. Die Spaltverluste zwischen dem Magnetanker 5 und dem äußeren Führungsrohr 2 können aber sehr klein gehalten werden, da dieser Querschnitt nicht von einem Medium durchströmt zu werden braucht. Der Luftspalt ist vielmehr auf den notwendigen Arbeitsluftspalt beschränkt, da durch die erwähnte Ausbildung des unteren Teils 2b des äußeren Führungsrohres 2 mit der Schraubenmutter 2a aus magnetisch leitendem Material für eine sehr gute Rückleitung des magnetischen Flusses gesorgt ist.

Die Ausbildung und Halterung der am Magnetanker 5 angeordneten als Ventilteller wirkenden Dichtungsplatte 6 kann in unterschiedlicher Weise erfolgen.

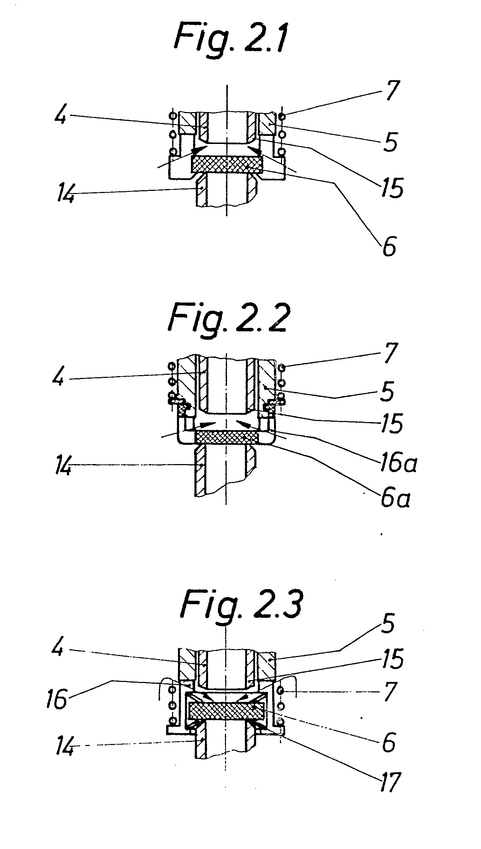

In Fig. 2.1 ist die Ausbildung der Dichtungsplatte 6 gemäß Fig. 1 noch einmal dargestellt und den in den Fig. 2.2 und 2.3 dargestellten Varianten gegenübergestellt.

Bei der Variante nach Fig. 2.2 ist am unteren Ende des Magnetankers 5 eine Dichtungskappe 6a angeordnet, deren horizontaler Abschnitt als Dichtungsplatte entweder auf dem Ventilsitz 14 oder dem Ventilsitz 15 aufliegt. An den Seiten der Dichtungskappe 6a sind die den Innenraum der Ventilkammer 11 mit dem Innenraum des Magnetankers 5 verbindenden Durchtrittsöffnungen 16a angeordnet.

Bei der Ausführungsform nach Fig. 2.3 ist die Dichtungsplatte 6 über beispielsweise elastische Halterungen 17 an der Innenseite des unteren Endes des Magnetankers 5 angeordnet. Bei der Verwendung von elastischen Halterungen 17 braucht die Dichtungsplatte 6 selbst nicht aus elastischem Material zu bestehen.

## Patentanspruch

Elektromagnetisch betätigbares 3/2-Wegeventil, insbesondere zur Fernsteuerung von einseitig mit einem Fluid beaufschlagbaren Vorrichtungen mit einem Ventilgehäuse (1), in dem eine einseitig offene Ventilkammer (11) angeordnet ist, die über einen ersten Kanal (12) mit einem Druckanschluß (P) und über einen zweiten Kanal (13) mit einem Arbeitsanschluß (A) verbunden ist, wobei das in der Ventilkammer (11) gelegene Ende des ersten Kanals (12) als erster Ventilsitz (14) ausgebildet ist, einem die offene Seite der Ventilkammer (11) abschließenden mit dem Ventilgehäuse (1) fest verbundenen Ventiloberteil, das ein mit einem Ende in das Ventilgehäuse (1) eingesetztes äußeres Führungsrohr (2), das an seinem, dem Ventilgehäuse (1) zugewandten Ende einstückig mit einer Befestigungsvorrichtung (2a) verbunden ist, und ein Kopfstück (3) aufweist, durch welches ein Rücklaufkanal (R) nach außen geführt ist, einer um das Ventiloberteil herum angeordneten Magnetspule (8), die an ihrer Außenseite von einem Magnetjoch (9) umfaßt ist, dessen Enden am Kopfstück (3) bzw. dem äußeren Führungsrohr (2) anliegen, sowie einem innerhalb des äußeren Führungsrohrs (2) angeordneten bewegbaren Ventilinnenteil (5, 6) mit einem Magnetanker (5) und einem am dem ersten Ventilsitz (14) zugewandten Ende angeordneten Ventilteller (6), das unter der Einwirkung einer Druckfeder (7) in einer Stellung festgehalten ist, in der der Ventilteller (6) auf dem ersten Ventilsitz (14) aufliegt und bei dem innerhalb des äußeren Führungsrohrs (2) und koaxial zu diesem ein inneres Rohr (4) angeordnet ist, das mit einem Ende an den Rücklaufkanal (R) angeschlossen ist und dessen anderes, als zweiter Ventilsitz (15) ausgebildetes Ende in einem vorgegebenen Abstand dem ersten Ventilsitz (14) gegenüberliegt, und bei dem das Ventilinnenteil (5, 6) als hohlzylindrischer, zwischen dem äußeren Führungsrohr (2) und dem inneren Rohr (4) angeordneter Körper ausgebildet ist, der als Magnetanker wirkt, der die Ventilkammer (11) mit dem Innenraum des Körpers verbindende Durchtrittsöffnungen (16, 16a) aufweist, wobei der beidseitig wirkende Ventilteller (6, 6a) so angeordnet ist, daß er bei einer Hubbewegung des Magnetankers (5) entgegen der Schließkraft der Druckfeder (7) nach einem vorgegebenen Hubweg auf dem zweiten Ventilsitz (15) aufliegt, dadurch gekennzeichnet, daß das obere Ende des äußeren Führungsrohres (2) innerhalb der Magnetspule (8) mit dem Kopfstück (3) verbunden ist, wobei ein dem Kopfstück (3) zugewandter oberer Abschnitt (2c) des Führungsrohres (2) aus nicht magnetisierbarem Werkstoff besteht, während ein der Befestigungsvorrichtung (2a) zugewandter unterer Abschnitt (2b) des Führungsrohres (2) aus magnetisch leitendem Material besteht, und daß die Durchtrittsöffnungen als unmittelbar an dem der Ventilkammer (11) zugewandten Ende des Ventilinnenteils (5, 6) angeordnete Schlitze (16, 16a) ausgebildet sind und der Ventilteller eine aus elastischem Material bestehende Dichtungsplatte (6, 6a) ist.

## Claim

An electromagnetic 2/3-way valve, especially for the remote control of fluid operated devices, comprising a valve housing (1) having arranged therein a valve chamber (11) which is open at one side and which is connected through a first passage (12), with a pressure conduit (P) and, through a second passage (13), with an operational conduit (A), the end of said first passage (12) which is located within said valve chamber (11), being formed as a first valve seat (14), further comprising an upper valve component closing the open side of said valve chamber (11) and rigidly connected to said valve housing (1), said upper valve component including an outer guide tube (2) which, at one end thereof, is inserted in said valve housing and which, at its end facing said valve housing (1), is integral with a connecting device (2a), and including a head piece (3) through which a return passage (R) leads to the outside, further comprising a magnet coil (8) the outside of which is surrounded by a magnet yoke (9) having its ends in contact with said head piece (3) and said outer guide tube (2), respectively, and further comprising a movable inner valve part (5, 6) arranged within said outer guide tube (2) and including a magnet core (5) and a valve plate (6) at the end thereof facing said first valve seat (14), said inner valve part (5) being retained, under the action of a compression spring (7), in a position in which said valve plate (6) bears against said first valve seat (14), said valve being provided, within said outer guide tube (2) and coaxial therewith, with an inner tube (4) which, at one end, is connected to said return passage (R), and the other end of which is formed as a second valve seat (15) and is located opposite said first valve seat (14) at a predetermined distance therefrom, and in which valve said inner valve part (5, 6) is formed as a hollow-cylindrical component arranged between said outer guide tube (2) and said inner tube (4), said component acting as a magnet core and being provided with openings (16, 16a) connecting said valve chamber (11) with the interior of said component, whereby said valve plate (6, 6a) which is effective on both sides, is arranged in such a way that it bears against said second valve seat (15) upon displacement of said magnet core (5) against the closing force of said compression spring (7) by a predetermined stroke length, characterized in that the upper end of said outer guide tube (2) is connected to said head piece (3) within said magnet coil (8), whereby an upper section (2c) of said guide tube (2) facing said head piece (3), consists of non-magnetizable material, whereas a lower section (2b) of said guide tube (2) facing said connecting device (2a), consists of magnetically conductive material, that said openings are formed as slots (16, 16a) arranged directly adjacent the end of said inner valve part (5, 6) facing said valve chamber (11), and that said valve plate is a sealing plate (6, 6a) made of elastic material.

## Revendication

Soupape à trois voies et deux positions à actionnement électromagnétique, en particulier pour la commande à distance de dispositifs à admission d'un fluide d'un seul côté, comportant un corps (1) de soupape, dans lequel est disposée une chambre (11) de soupape ouverte d'un côté, qui est reliée par l'intermédiaire d'un premier canal (12) à un raccord de pression (P) et par l'intermédiaire d'un second canal (13) à un raccord de travail (A), l'extrémité du premier canal (12) située dans la chambre (11) de soupape étant agencée en tant que premier siège (14) de soupape, une partie supérieure de soupape solidarisée au corps (1) de soupape, qui obture le côté ouvert de la chambre (11) de soupape et qui présente un tube de guidage (2) extérieur inséré par une extrémité dans le corps (1) de soupape, ledit tube étant raccordé d'une seule pièce à son extrémité tournée vers le corps (1) de soupape par un dispositif (2a) de fixation, et présentant une pièce de tête (3), à travers laquelle s'étend vers l'extérieur un canal de retour (R), une bobine (8) d'aimant disposée autour de la partie supérieure de soupape et entourée sur sa face extérieure par une culasse (9) d'aimant dont les extrémités viennent s'appliquer respectivement contre la pièce de tête (3) et le tube de guidage (2) extérieur, ainsi qu'une partie intérieure (5, 6) de soupape mobile disposée à l'intérieur du tube de guidage (2) extérieur et composée d'une armature (5) d'aimant et d'un plateau (6) de soupape disposé à l'extrémité tournée vers le premier siège (14) de soupape et maintenu fixe sous l'action d'un ressort (7) de pression dans une position dans laquelle le plateau (6) de soupape repose sur le premier siège (14) de soupape, dans ladite soupape étant disposé à l'intérieur du tube de guidage (2) extérieur et coaxialement à ce dernier, un tube (4) intérieur, qui est raccordé par une extrémité au canal de retour (R) et dont l'autre extrémité agencée en tant que second siège (15) de soupape est opposée sur une distance prédéterminée au premier siège (14) de soupape et, dans laquelle soupape, la partie intérieure (5, 6) de soupape est agencée sous la forme d'un corps cylindrique creux disposé entre le tube de guidage (2) extérieur et le tube (4) intérieur, que joue le rôle d'armature d'aimant et qui présente des orifices de passage (16, 16a) faisant communiquer la chambre (11) de soupape avec l'espace intérieur dudit corps, le plateau (6, 6a) de soupape agissant des deux côtés étant disposé de façon que lors d'un mouvement de levée de l'armature (5) d'aimant, il vienne s'appliquer, contre le force de serrage du ressort (7) de pression, après un trajet de levée prédéterminé sur le second siège (15) de soupape, caractérisé par le fait que l'extrémité supérieure du tube de guidage (2) extérieur est assemblée à l'intérieur de la bobine (8) d'aimant avec la pièce de tête (3), une portion supérieure (2c) du tube de guidage (2) tournée vers la pièce de tête (3) étant constituée en un matériau non magnétisable, tandis qu'une portion inférieure (2b) du tube de guidage (2) tournée vers le dispositif de fixation (2a) est constituée en un matériau conducteur magnétique, et que les orifices de passage sont agencés sous forme de fentes (16, 16a) disposées directement à l'extrémité de la partie intérieure (5, 6) de soupape tournée vers la chambre (11) de soupape et le plateau de soupape est une plaquette d'étanchéité (6, 6a) constituée en un matériau élastique.

# Fig.1

Fig. 2.1

Fig. 2.2

Fig. 2.3